# EUROPEAN PATENT APPLICATION

(11) **EP 4 779 880 A1**
(43) Date of publication of application: **22.07.2026**
(21) Application number: 25152225.6
(22) Date of filing: 16.01.2025
(51) Int. Cl.: H04B 5/26, H04B 5/79, H02J 7/00, H02J 50/40, H02J 50/80, H02J 50/12

(54) **WIRELESS POWER TRANSFER**

(71) Applicant: Koninklijke Philips N.V., 5656 AE Eindhoven (NL)
(72) Inventor: VAN ACHT, Victor Martinus Gerardus, 5656 AG Eindhoven (NL); VAN DEN DUNGEN, Wilhelmus Andreas Marinus Arnoldus Maria, 5656 AG Eindhoven (NL); DRAAK, Johannes Wilhelmus, 5656 AG Eindhoven (NL)
(74) Representative: Philips Intellectual Property & Standards

(57) **Abstract**

A wireless power transmitter (101) comprising one or more power transfer coils (103, 105) arranged to generate an electromagnetic power transfer signal for a power receiver in response to a drive signal generated by a driver (201). A communicator (209) establishes a communication channel with each power receiver (107, 109) receiving power via a power transfer coil. The communicator (209) receives first data from a first power receiver (107, 109) receiving power via a first communication channel established with the first power receiver (107, 109) and forwards the data to a second power receiver (107, 109) receiving power over a second communication channel established with the second power receiver (107, 109). The approach may allow inter-power receiver communication without requiring additional communication channels to be established.

## Description

### FIELD OF THE INVENTION

The invention relates to wireless power transfer and in particular, but not exclusively, to wireless power transfer systems operating in accordance with elements of the Ki wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Wireless Power Consortium has proceeded to develop the Ki Specification (also known as the Cordless Kitchen Specification) which is aimed at providing safe, reliable, and efficient wireless power transfer to high power devices such as kitchen appliances. Ki supports much higher power levels than Qi, and indeed power levels up to 2.5KW are supported.

In line with the development and deployment of wireless power transfer systems such as Ki, there is an increasing desire for additional functionality and flexibility including a desire for additional and improved applications, use cases, user experiences, user interfaces, and operations.

Hence, an improved wireless power transfer approach would be advantageous, and in particular, an approach allowing increased flexibility, reduced cost, reduced complexity, improved power transfer operation, improved user experiences, improved user interface, increased reliability, increased efficiency, improved and/or additional functionality and/or operation, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a wireless power transmitter for wirelessly providing power to a power receiver via an electromagnetic power transfer signal, the power transmitter comprising: at least one power transfer coil each of which is arranged to generate an electromagnetic power transfer signal for a power receiver in response to a drive signal being provided to the power transfer coil; a driver arranged to generate at least one drive signal for the at least one power transfer coil to perform a power transfer; a communicator arranged to establish a communication channel with each power receiver receiving power via a power transfer coil of the at least one power transfer coil; wherein the communicator is arranged to receive first data from a first power receiver receiving power via a first communication channel established with the first power receiver and to forward the data to a second power receiver receiving power over a second communication channel established with the second power receiver.

The invention may allow improved performance and/or facilitated operation in many wireless power transfer systems. It may allow/support/enable a range of new applications, functions, and use cases to be effectively implemented. The approach may allow inter-power receiver communication without requiring any additional or dedicated communication means or functionality to enable the communication. The inter-power receiver communication may be implemented using already established communication media and functionality that is required/used for the power transfer operations.

In accordance with an optional feature of the invention the first power receiver is receiving power from a first power transfer coil of the at least one power transfer coil and the second power receiver is a different power receiver receiving power from a second power transfer coil of the at least one power transfer coil, the first power transfer coil and the second power transfer coil being different power transfer coils.

This may provide particularly advantageous operation in many embodiments and scenarios.

The communication may be real-time communication. The first power receiver and the second power receiver may (simultaneously) be receiving power via different power transfer coils.

In accordance with an optional feature of the invention, the first power receiver and the second power receiver are receiving power simultaneously.

This may provide particularly advantageous operation in many embodiments and scenarios.

In accordance with an optional feature of the invention, the communicator comprises a store arranged to store the first data and the communicator is arranged to retrieve the first data from the store for subsequent transmission of the first data to the second power receiver.

This may provide particularly advantageous operation in many embodiments and scenarios. The communication from the first power receiver to the second power receiver may be a non-instantaneous/non-real time communication.

In accordance with an optional feature of the invention, the communicator is arranged to transmit the first data to the second power receiver after termination of a power transfer for the first power receiver.

This may provide particularly advantageous operation in many embodiments and scenarios.

In accordance with an optional feature of the invention, the first power receiver is different from the second power receiver.

This may provide particularly advantageous operation in many embodiments and scenarios.

In accordance with an optional feature of the invention, the first power receiver and the second power receiver are the same power receiver.

This may provide particularly advantageous operation in many embodiments and scenarios.

In accordance with another aspect of the invention, the communicator is arranged to trigger a modification of the first data in response to receiving the first data from the first power receiver.

This may provide particularly advantageous operation in many embodiments and scenarios.

In accordance with an optional feature of the invention, the communicator is arranged to distribute the first data over a plurality of communication messages and to transmit the plurality of communication messages to the second power receiver.

This may be particularly advantageous in many embodiments.

In accordance with an optional feature of the invention, the communicator is arranged to combine first data from a plurality of data messages received from the first power receiver over the first communication channel into a single data message for transmission to the second power receiver over the second communication channel.

This may be particularly advantageous in many embodiments.

In accordance with an optional feature of the invention, the first data includes at least one from the group of: user preference data; synchronization data; timing data; an indication of a previous operation; an indication of a current operation; and network access data.

This may be particularly advantageous in many embodiments.

In accordance with an optional feature of the invention, the wireless power transmitter further comprises a network interface (211) coupling to a network; and the network interface (211) is arranged to transmit the first data to a remote node of the network; and/or to receive second data from a remote node of the network and to transmit it to the second power receiver (109) over the second communication channel.

In accordance with an optional feature of the invention, the wireless power transmitter further comprises a network interface coupling to a network; and the network interface is arranged to transmit the first data to a remote node of the network.

This may be particularly advantageous in many embodiments. The remote node may be another wireless power transmitter.

In accordance with an optional feature of the invention, the wireless power transmitter further comprises a network interface coupling to a network; and the network interface is arranged to receive second data from a remote node of the network and to transmit it to the second power receiver over the second communication channel.

This may be particularly advantageous in many embodiments. The remote node may be another wireless power transmitter.

In accordance with an optional feature of the invention, the wireless power transmitter comprises an Internet interface coupling to the Internet and the first data includes an internet request; the Internet interface is arranged to retrieve second data from the Internet in response to the internet request, and the communicator is arranged to transmit the second data to at least one of the first power receiver and the second power receiver.

This may be particularly advantageous in many embodiments.

In accordance with an optional feature of the invention, the first data is linked to a power receiver identity and the communicator is arranged to transmit the first data to the second power receiver in dependence on an identity for the second power receiver matching the power receiver identity.

This may be particularly advantageous in many embodiments.

In accordance with an optional feature of the invention, the communicator is arranged to receive a label for at least some of the first data and to transmit the at least some of the first data to the second power receiver in dependence on receiving a request message from the second power receiver comprising a label indication matching the label for the at least some of the first data.

This may be particularly advantageous in many embodiments.

There may be provided a power transfer system comprising a power transmitter as described above and further comprising the second power receiver, the second power receiver comprising: an input circuit comprising a receiver coil arranged to extract power from the power transfer signal; a power path coupling the input circuit to a load to provide power extracted from the power transfer signal to the load; a communicator arranged to receive the first data from the power transmitter via the second communication channel; and an adapter arranged to adapt an operation of the power transfer in dependence on the first data.

There may be a provided power transfer system comprising a power transmitter as described above and further comprising the first power receiver, the first power receiver comprising: an input circuit comprising a receiver coil arranged to extract power from the power transfer signal; a power path coupling the input circuit to a load to provide power extracted from the power transfer signal to the load; a communicator arranged to transmit the first data to the power transmitter via the first communication channel.

In accordance with another aspect of the invention, there is provided a power receiver for wirelessly receiving power from a power transmitter via an inductive power transfer signal, the power receiver comprising: an input circuit comprising a receiver coil arranged to extract power from the power transfer signal; a power path coupling the input circuit to a load to provide power extracted from the power transfer signal to the load; a communicator arranged to communicate data with the power transmitter via a communication channel, the communicator being arranged to transmit a request for operational data and to receive operational from the power transmitter in response to the request for operational data; and an adapter arranged to adapt an operation of the power transfer in dependence on the received operational data.

In accordance with another aspect of the invention, there is provided a method of operation for a wireless power transmitter wirelessly providing power to a power receiver via an electromagnetic power transfer signal, the power transmitter comprising: at least one power transfer coil each of which is arranged to generate an electromagnetic power transfer signal for a power receiver in response to a drive signal being provided to the power transfer coil; and the method comprising: generating at least one drive signal for the at least one power transfer coil to perform a power transfer; establishing a communication channel with each power receiver receiving power via a power transfer coil of the at least one power transfer coil; receiving first data from a first power receiver receiving power via a first communication channel established with the first power receiver; and forwarding the data to a second power receiver receiving power over a second communication channel established with the second power receiver.

In accordance with another aspect of the invention, there is provided a method of operation for a power receiver wirelessly receiving power from a power transmitter via an inductive power transfer signal, the power receiver comprising: an input circuit comprising a receiver coil arranged to extract power from the power transfer signal; a power path coupling the input circuit to a load to provide power extracted from the power transfer signal to the load; and the method comprising: communicating data with the power transmitter via a communication channel, including transmitting a request for operational data and receiving operational from the power transmitter in response to the request for operational data; and adapting an operation of the power transfer in dependence on the received operational data.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
Fig. 1 illustrates an example of elements of a power transfer system in accordance with some embodiments of the invention;
Fig. 2 illustrates an example of elements of a power transmitter in accordance with some embodiments of the invention;
Fig. 3 illustrates an example of a half bridge inverter for a power transmitter;
Fig. 4 illustrates an example of a full bridge inverter for a power transmitter;
Fig. 5 illustrates an example of elements of a communicator for a power transmitter in accordance with some embodiments of the invention;
Fig. 6 illustrates an example of elements of a power receiver in accordance with some embodiments of the invention;
Fig. 7 illustrates an example of a communication format for data transmitted in a wireless power transfer system.

### DETAILED DESCRIPTION OF THE EMBODIMENTS

The following description focuses on embodiments of the invention applicable to a high power wireless power transfer system utilizing a power transfer approach such as known from the Ki Specifications. However, it will be appreciated that the invention is not limited to this application but may be applied to many other wireless power transfer systems.

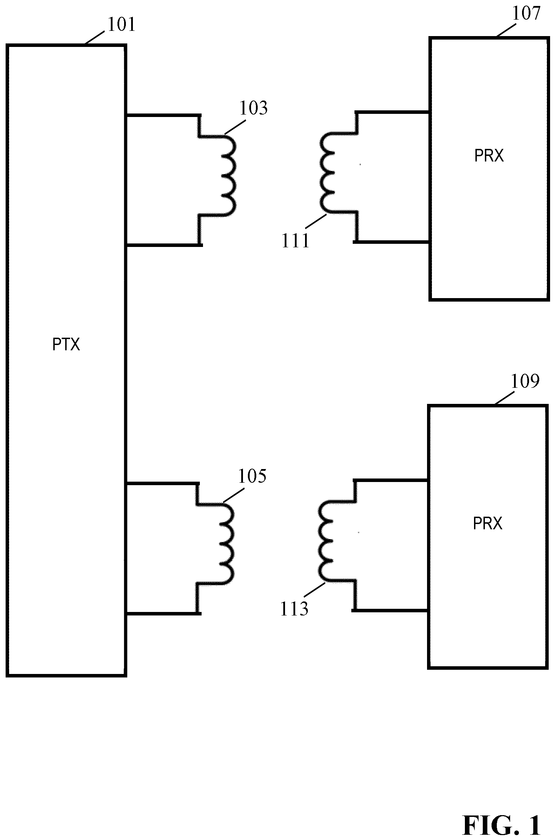

Fig. 1 illustrates an example of a power transfer system in accordance with some embodiments of the invention. The power transfer system comprises a power transmitter 101 which includes (or is coupled to) one or more transmitter coils / inductors 103, 105. In the specific example, the power transmitter includes a plurality of transmitter coils of which two are shown but it will be appreciated that in other embodiments there may be more or fewer transmitter coils and the power transmitter may be arranged to (separately, independently, and individually) simultaneously provide power to more (or fewer) power receivers. In the example, the system further comprises two power receivers 107, 109 which each include (or are coupled to) a receiver coil! inductor 111, 113 for power transfer.

The power transmitter can from each power transmitter coil 103, 105 provide an inductive electromagnetic power transfer signal that may inductively transfer power from the power transmitter 101 to one of the power receivers 107, 109. Specifically, the power transmitter 101 from each transmitter coil 103,105 generates an electromagnetic signal, which is propagated as a magnetic flux by the transmitter coil or inductor 103, 105. The power transfer signal may typically have a frequency between around 20 kHz to around 500 kHz, and in many practical systems may be around 20-75 kHz. The given transmitter coil 103 (105) and the corresponding power receiving coil 111(113) are loosely coupled and thus the power receiving coil 111(113) picks up (at least part of) the power transfer signal from the power transmitter 101. Thus, the power is transferred from the power transmitter 101 to the individual power receiver 107, 109 via a wireless inductive coupling from a transmitter coil 103(105) to the corresponding power receiving coil 111(113). The term power transfer signal is mainly used to refer to the inductive signal! magnetic field between the transmitter coil and the power receiving coil (the magnetic flux signal), but it will be appreciated that by equivalence it may also be considered and used as a reference to an electrical signal provided to the transmitter coil or picked up by the power receiving coil.

In the example, each power receiver 107, 109 is specifically a power receiver that receives power via the receiver coil 111, 113. However, in other embodiments, a power receiver 107, 109 may comprise a metallic element, such as a metallic heating element, in which case the power transfer signal directly induces eddy currents resulting in a direct heating of the element.

In the following, the operation of the power transmitter 101 (including the transmitter coils 103, 105 and the power receivers 107, 109 will be described with specific reference to an embodiment generally in accordance with the Ki Specifications (except for the herein described (or consequential) modifications and enhancements).

Many wireless power transfer systems utilize resonant power transfer where the transmitter coil is part of a resonance circuit and typically the receiver coil is also part of a resonance circuit. In many embodiments, the resonance circuits may be series resonance circuits and thus the transmitter coil and the receiver coil may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power can be measured and together with the setpoint power value, an error signal can be generated. The power receiver sends this error signal to the power control function in the power transmitter to reduce the static error, ideally to zero.

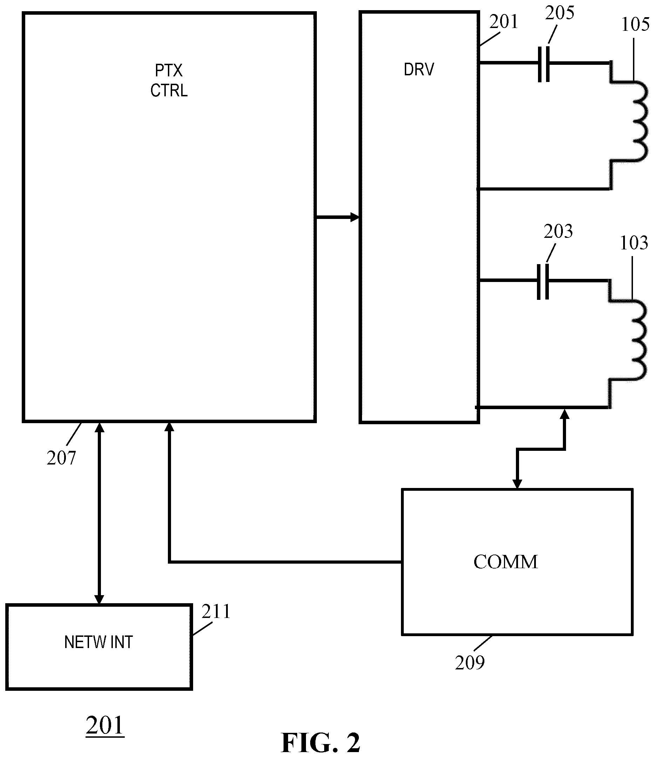

Fig. 2 illustrates an example of elements of the power transmitter 101 of FIG. 1 in more detail.

The power transmitter 101 includes a driver 201 which can generate a plurality of drive signals, each of which is fed to a transmitter coil 103, 105 which in return generates an electromagnetic power transfer signal thereby providing a power transfer to a power receiver 107, 109. The transmitter coils 103, 105 are part of an output resonance circuit which comprises the transmitter coil 103, 105 and a capacitor 203, 205. In the example, each output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

The following description will for clarity and brevity focus on one power transfer operation circuit/operation and one output resonance circuit. However, it will be appreciated that the description will also apply to the other power transfer operations/output circuits/power transfer signal. Thus, the described approach may be performed for each of the power transfer outputs/operations.

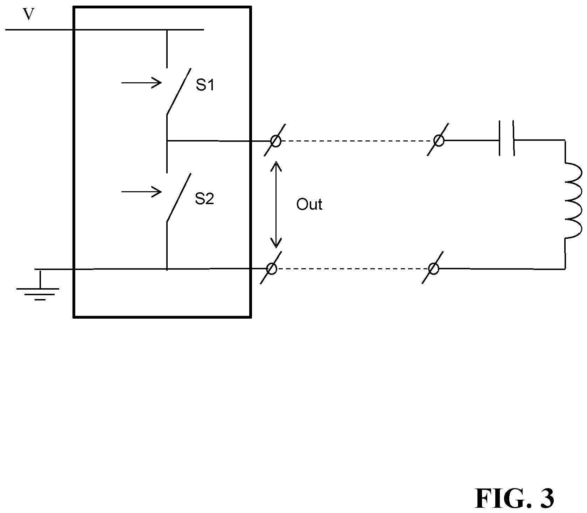

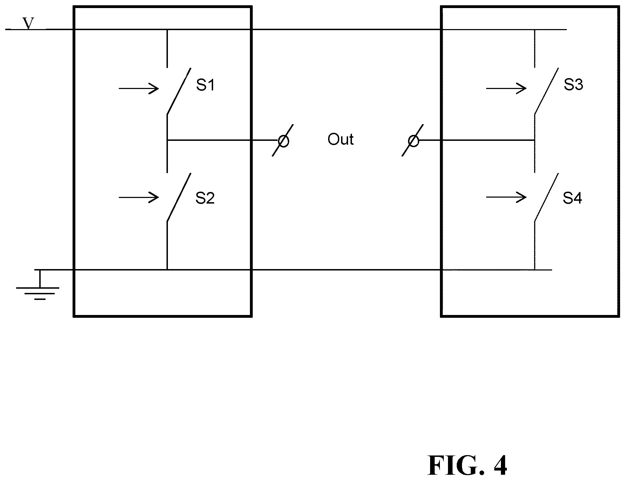

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 207 which is arranged to control the operation of the power transmitter 101 in accordance with the desired operating principles. Specifically, the power transmitter 101 may include many of the functionalities required to perform power control in accordance with the Ki Specification.

The power transmitter controller 207 is in particular arranged to control the generation of the drive signals by the driver 201, and it can specifically control the power level of the drive signals, and accordingly the level of the generated power transfer signals. The power transmitter controller 207 comprises a power loop controller controlling a power level of the power transfer signal for each power transfer operation in response to the power control messages received from the corresponding power receiver 107, 109 during the power transfer phase.

The power transmitter 101 further comprises a communicator 209, which is arranged to communicate with the power receivers currently supported/present/receiving power. The communicator 209 may transmit data to a power receiver 107, 109 by frequency modulating the power transfer signal generated by the transmitter coil 103, 105 supporting that power receiver 107, 109. For example, the communicator 209 may control the driver 201 to generate the power transfer signal for a given power receiver 107, 109 by changing the frequency of the corresponding power transfer signal dependent on the data to be transmitted. The communication may specifically use a Frequency Shift Keying (FSK) modulation scheme for transmitting data from the power transmitter to a power receiver.

The communicator 209 may further be arranged to receive data transmitted to the power transmitter 101 from each supported/present power receiver 107, 109. The data is transmitted by load modulation where the power receiver 107, 109 changes a loading of the power transfer signal for the power receiver 107, 109 in accordance with the data symbols being communicated. The communicator 209 may in such cases include a load modulation detector which is coupled to the output circuits 105, 205, 103, 203 and which is arranged to detect variations in/ perform measurements of the load of the power transfer signals. The load modulation detector may specifically measure the loading of the power transfer signal by measuring a power, current, and/or voltage for the appropriate transmitter coil 103, 105. It may specifically sample the load at given sample instants and determine the load value for the sample times accordingly. The communicator 209 is arranged to determine received data symbols based on the detected loading values.

In the above example, communication is performed using the power transfer signal as a communication carrier. However, in other embodiments, a separate carrier may be generated and used for communication. In particular, in many embodiments, the communicator 209 may comprise a separate communication coil for each power transfer coil with each communication coil being arranged to generate a separate communication carrier for providing a (bidirectional) communication channel with each power receiver receiving power/ involved in a power transfer.

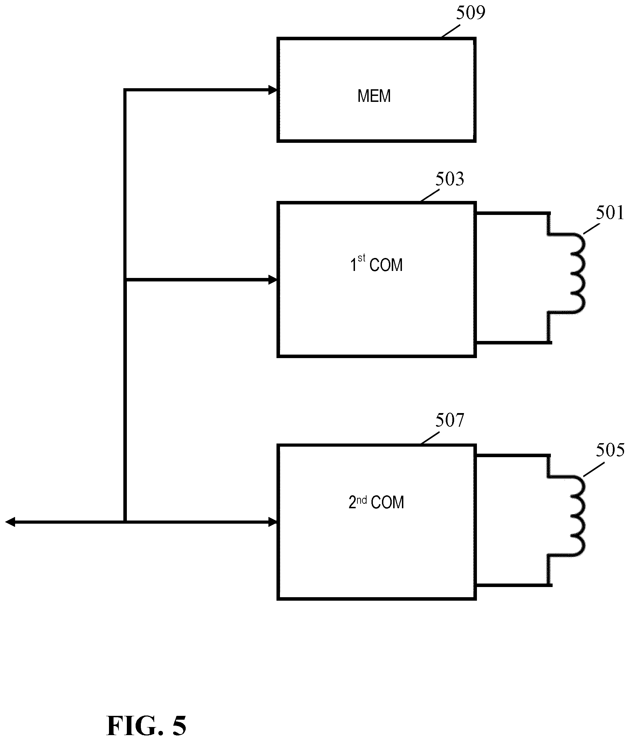

For example, as illustrated in FIG. 5, the communication to the first power receiver 107 may be using communication channel formed by modulation of a first communication carrier (signal) that is generated by a first communication coil 501. The communicator 209 may comprise a first power transmitter communicator 503 coupled to the first communication coil 501 and arranged to generate a communication drive signal which is fed to the first communication coil 501 to generate the first communication carrier. In addition, the communication to the second power receiver 109 may use a communication channel formed by modulation of a second communication carrier (signal) that is generated by a second communication coil 505. The communicator 209 may comprise a second power transmitter communicator 507 coupled to the second communication coil 505 and arranged to generate a communication drive signal which is fed to the second communication coil 505 to generate the second communication carrier. Thus, the communicator 209 in this example includes separate and parallel functionality for establishing a communication channel with one power receiver being involved in a power transfer operation. Each communication channel is in the example established using a separate communication carrier generated by a separate communication coil. Thus, in this example, there is provided both a power transfer coil and a communication coil for each power receiver/power transfer supported by the power transmitter.

The first and second communicators 503, 507 may be arranged to modulate the corresponding communication drive signal! communication carrier signal in order to transmit data to the corresponding power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

For communication from the power receiver to the power transmitter, the modulation of the communication drive signal may be a load modulation. The power receiver may be arranged to modulate the communication drive signal by varying a loading of the communication drive signal generated by the communication coil 501, 503 in accordance with the data to be transmitted. The first and second communicators 503, 507 are specifically arranged to sense variations in the voltage and/or current of the corresponding communication coil 501, 505 and to demodulate the load modulation based on these. In typical embodiments, the first and second communicators 503, 507 may for example receive data from the corresponding power receiver and forward it to the power transmitter controller 207 for controlling the power transfer signal etc. The received data symbols are fed from the communicator 209 to the power transmitter controller 207 which may adapt the operation of the power transfers in response to this data. For example, power error data may be received and the power transmitter controller 207 may adapt the power level of the appropriate drive signal thereby implementing a power control loop with the given power receiver 103, 105.

In some embodiments, the communication may be in accordance with the Near Field Communication, NFC, Specifications and the power receiver may specifically include NFC functionality. In these embodiments, the first and second communicators 503, 507 and the first and second communication coils 501, 505 may implement (at least) the functionality of an NFC reader. Thus, in some embodiments, the communication drive signal! communication carrier signal is a constant level (except for modulation) 13.56 MHz signal.

The following description will focus on examples where the communication between the power transmitter and power receivers is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation. Such an approach may specifically be compatible with the Ki Specifications.

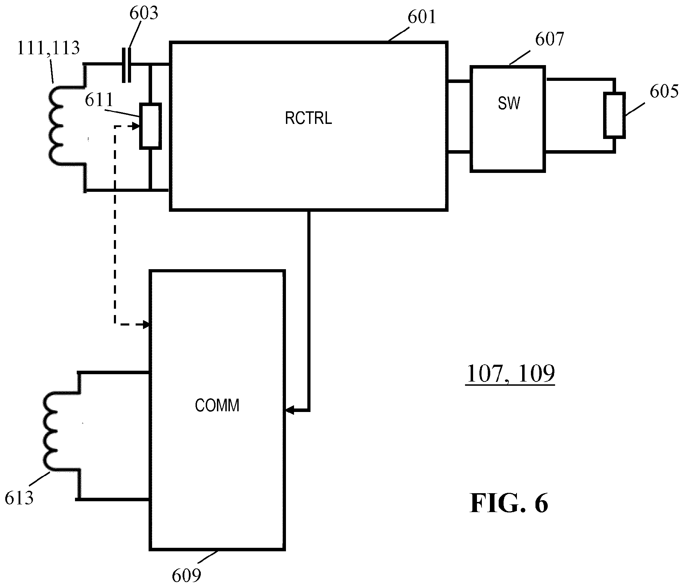

FIG. 6 illustrates some exemplary elements of the power receiver 107. The following description will also apply to power receiver 109 which may implement the same functions to enable wireless transfer in accordance with a suitable technical specification and in particular in accordance with the Ki Specifications.

In the example, the receiver coil 111 is coupled to a power receiver controller 601 via a capacitor 603 which together with the receiver coil 111 forms an input resonance circuit. Thus, the power transfer may be a resonant power transfer between resonance circuits. In other embodiments, only one, or none, of the power receiver and the power transmitter may utilize a resonance circuit for power transfer.

The power receiver controller 601 couples the receiver coil 111 to a load 605 via a switch 607. The power receiver controller 601 includes a power control path which converts the power extracted by the receiver coil 111 into a suitable supply for the load 605. In some embodiments, the power receiver controller 601 may provide a direct power path which simply connects the input resonance circuit to the switch 607 or load 605, i.e. the power path of the power receiver controller 601 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Ki (or e.g. Qi) Specifications.

The power receiver 107 is arranged to transmit data to the power transmitter 201. Such data may specifically include power control loop error messages used to implement a feedback power loop for controlling the power level of the power transfer signal during power transfer as will be known to the skilled person. The power receiver 107 may in many embodiments be capable of transmitting a range of different messages serving different purposes as known to the skilled person. For example, a range of different messages such as those specified in the Ki or Qi Specifications may be transmitted. Messages may comprise one or more data bits/ symbols.

The power receiver 107 accordingly comprises a power receiver communicator 609 which is arranged to communicate with the communicator 207 using one of the communication channels established by this.

In some embodiments, the power receiver may be arranged to communicate using the power transfer signal. In such cases, the power receiver is arranged to transmit messages to the power transmitter using load modulation of the power transfer signal. As will be well known to the skilled person, for load modulation, changes in the loading of the power transfer signal may be introduced by the power receiver where the changes are in accordance with data values to be transmitted. These changes can then be detected by the power transmitter in order to decode the data from the power receiver.

In such an example, the power receiver communicator 609 may control a variable load 611 that provides a modulation loading of the power transfer signal. Variations in the value of the variable load 611 results in a changed effective load provided to the receiver coil 211. As a result, the induced (real and/or reactive) power changes and thus the loading of the power transfer signal by the receiver coil 211 changes. The loading of the receiver coil 21 1/the power transfer signal is dependent on the value of the variable load. Specifically, changes in the value of the variable load results in changes in the loading of the power transfer signal. The power receiver communicator 609 is arranged to load modulate the power transfer signal by varying the value of the variable load thereby varying the modulation loading of the power transfer signal. The modulation loading is a variable loading of the power transfer signal providing the load modulation of the power transfer signal. The modulation loading can be considered to correspond to a load and/or impedance value of the variable load.

Thus, the power receiver communicator 609 may be arranged to change the value of the variable load in dependence on data symbol values being transmitted thereby providing a varying modulation loading of the power transfer signal.

In some embodiments the power receiver communicator 609 may accordingly be coupled to the variable load 611 and be arranged to modify this in response to the data symbols to be transmitted. Thus, the power receiver communicator 609 may be arranged to vary the variable load 611 to provide a modulation loading of the power transfer signal.

The power receiver communicator 609 may further be arranged to demodulate data symbols transmitted from the power transmitter 101. Specifically, the power transmitter 101 may modulate data on to the power transfer signal using frequency modulation (and specifically using FSK) and the power receiver controller 201 communicator 609 may measure the frequencies of the power transfer signal and detect the data symbols represented by the frequency variations.

In other embodiments, a separate communication carrier may be used to establish the communication channel. The power receiver 107 may comprise a power receiver communication coil 613 which is arranged to couple to a power transmitter communication coil 501, 505 and thus the communication carrier signal induces a current (at least an emf) in the power receiver communication coil 613.

The power receiver communicator 609 may in such an example be coupled to the power receiver communication coil 613 and may be arranged to determine amplitude variations in the induced signal and to demodulate amplitude modulations of the communication carrier signal. Thus, the power receiver communicator 609 may be arranged to decode data transmitted from the power transmitter by amplitude modulation of the communication carrier signal. It will be appreciated that in other embodiments, the power receiver communicator 609 may be arranged to decode data modulated onto the communication carrier signal using other modulation formats such as frequency or phase modulation.

The power receiver communicator 609 is further arranged to load modulate the communication carrier signal in order to transmit data from the power receiver to the power transmitter. Specifically, the power receiver communicator 609 may comprise a load (such as a capacitor) which depending on the data to transmit can be switched between being coupled to the power receiver communication coil 613 and not being coupled to the power receiver communication coil 613. These load modulations may then be detected by the communicator 207 of the power transmitter.

In the specific example, the power receiver communication coil 613 and the power receiver communicator 609 may provide NFC compatible communication operation. Specifically, the power receiver communication coil 613 may be arranged to provide functionality corresponding to an NFC tag and to decode data that has been ASK modulated onto the communication carrier signal in accordance with the NFC specifications.

Thus, the power receiver communicator 609 may be arranged to transmit data to the power transmitter by varying the loading of the power receiver communication coil 613 in response to data to be transmitted to the power transmitter 101. The load variations are then detected and demodulated by the power transmitter 101 as will be known to the person skilled in the art.

In the example, the power receiver communicator 609 is furthermore arranged to demodulate amplitude, frequency, and/or phase modulation of the communication carrier signal in order to retrieve data transmitted from the power transmitter.

The power transfer system of FIG. 1 accordingly comprises functionality for performing communication between the power transmitter and (each) power receiver in order to support the power transfer operation, and specifically to dynamically control and adapt the operational parameters for the power transfer.

In addition, the communicator 209 is arranged to receive data from a power receiver that is receiving power via a first communication channel established with the first power receiver and to then transmit this received data to a second power receiver via a second communication channel established with the second power receiver. For example, the power transmitter 101 may simultaneously perform a power transfer with the first power receiver 107 and with the second power receiver 109 and thus communication channels are established with each of the power receivers 107, 109. As such, power transfer operational data is continuously exchanged between the power transmitter and the power receivers 107, 109. However, in addition, the first power receiver 107 can transmit data to the power transmitter 101 which by the power transmitter 101 is forwarded to the second power receiver 109. In some embodiments, the data may be forwarded directly and with minimal delay and thus the power transmitter may effectively operate as an intermediate communication entity establishing a communication link directly between two power receivers engaged in a power transfer operation. Further, this may be achieved using existing functionality and without requiring additional or dedicated hardware functions. Indeed, the approach may use existing approaches and functionality that is provided for the purpose of allowing power transfer operations to provide an additional service and inter power receiver communication.

In some embodiments, the first power receiver 107 and the second power receiver 109 are different power receivers that are both simultaneously engaged in a power transfer operation where they are each receiving power from the power transmitter 101 via different power transfer coils. As such, power transfer communication channels are set up for both the first and second power receiver 107, 109. The system may in addition to the power transfer communication further use the established power transfer communication channels to communicate data from the first power receiver 107 to the second power receiver 109 via the power transmitter 101. Thus, in this approach, the power transmitter 101 effectively implements a communication channel between the first power receiver 107 and the second power receiver 109 allowing the power receivers 107, 109 to communicate directly with each other. Indeed, in many embodiments, the power transmitter 101/communicator 209 may be arranged to forwarding data received from the first power receiver 107 to the second power receiver 109 and to forwarding data received from the second power receiver 109 to the first power receiver 107. Thus, in many cases, a bilateral communication link between the first power receiver 107 and the second power receiver 109 may be established by the power transmitter 101/communicator 209.

The approach may allow, support, enable and/or facilitate a large number of additional functions, services, and/or applications in many embodiments.

For example, a power transmitter in the form of a Ki-compliant cooktop may receive a message from a first Ki-compliant appliance (corresponding to the first power receiver 107) via the Ki NFC channel and relay this message to a second Ki-compliant appliance (corresponding to the second power receiver 109) via the Ki NFC channel. In particular, the bytes from a message from the Ki NFC channel from the first appliance can be relayed to the second Ki appliance via the Ki NFC channel established for the second Ki appliance. In such an example, the Ki-compliant cooktop may function as a message hub that forwards messages from one Ki-appliance to another.

In some embodiments, the power transmitter may forward one or more proprietary messages received from the first power receiver 107 to the second power receiver 109. For example, the Ki cooktop may relay and broadcast any proprietary Ki-message received from one supported Ki appliance to all other Ki appliances. This allows a Ki-compliant appliance on one power transfer coil to communicate to another Ki-compliant appliance on another power transfer coil in real time. As an example of a service that may be supported by such an arrangement is a synchronized cooking between two or more Ki-appliances.

The communication between the power receivers, and specifically between Ki devices/appliances, may be in accordance with the communication standards defined for the wireless power transfer system, such as specifically in accordance with the Ki Specification Communications Protocol.

The Ki communication protocol is defined by the Wireless Power Consortium developing the Ki Specification. It standardizes a communication protocol on top of the ISO 14443 physical layer that allows bi-directional communication between a power transmitter (e.g. a cooktop) and the power receiver (e.g. appliance). The power transmitter can send messages to the power receiver, and the power receiver can send messages to the power transmitter. Most of the messages that have been standardized and are related to the power delivery and safety aspects of Ki.

The Ki-standard also has a PROP-message type (message type value 15) (see section 3.5.10 of the Ki Specification). This message type can be used for proprietary messages that are outside the current Ki-specification.

In some embodiments, data for inter-power receiver communication may be transmitted to and from the power transmitter using a Ki PROP message.

In some embodiments, if a Ki compatible power transmitter (such as a Ki cooktop) receives a PROP-message from a supported Ki appliance, it relays (forwards, copies) this message and its payload to the other coils supporting communication channels. Effectively this means that different Ki-appliances on the power transmitter can communicate with each other via PROP-messages and with the power transmitter forwarding the PROP-messages transparently to the other appliances.

The Ki-communication protocol requires that the PROP message is the last message in a message frame and the payload of the PROP message is the bytes following the PROP message itself (if any) until the end of the message frame. Accordingly, the Ki power transmitter does not itself need to be able to interpret the PROP messages in order to forward them or the payload. Thus, the power transmitter may simply forward the messages to provide a communication link between power receivers with the communication link supporting any data or functionality. For example, new proprietary services and applications can be provided for power receivers (e.g. of the same manufacturer) without requiring that the power transmitter has any functionality for, or even knowledge of such functionality.

The Ki communication protocol has a few message types that are currently "reserved for future use" (message type value 8-14).

In some embodiments, the data to be forwarded may be transmitted from the first power receiver 107 to the power transmitter 101 using a dedicated message which defines that the data is data to be forwarded to (an)other power receiver(s).

For example, for the Ki Specifications a dedicated message may be defined, e.g. a FORWARD message may be defined for data that is not intended for the power transfer operation or the power transmitter, but rather with the data payload being intended for being forwarded to another power receiver. The same message may also be used to transmit this data from the power transmitter to the other power receiver, or a separate message type may be defined for this purpose.

Specifically, a FORWARD message type with a value in the range between 8 and 14 may be defined. The FORWARD message may advantageously be defined such that it can only be the last message in a message frame (allowing the power transmitter to know that all bytes until the end of the message frame are the payload for the FORWARD message and thus that the remaining data of the message frame can just be relayed/forwarded to other power receivers and need not be interpreted by the power transmitter.

An advantage of defining a new message type is that the payload of this message type can be standardized in the Ki-standard into more detail. This could enable new use cases (for example exchange of recipes between appliances of different manufacturers).

As indicated above, in many embodiments, the forwarding/relaying of data may be performed in real-time and substantially without any delay. However, in many embodiments, the communicator 209 may include a store 509 which may store the received data for later transmission to the second power receiver 109. The store 509 may be implemented as any suitable memory such as a RAM, EEPROM, etc.

Thus, in some embodiments, the communicator 209 may when receiving data from the first power receiver 107 which is intended to be forwarded to another power receiver, also henceforth referred to as forwarding data, it may proceed to store this data in the store 509. At a later point, the communicator 209 may retrieve the forwarding data from the store 509 and proceed to transmit it to the second power receiver 109 (and in many cases to all power receivers receiving power from the power transmitter).

In some cases, the store 509 may be arranged to store the forwarding data for relative short durations. For example, the data may be stored temporarily in order to allow the forward transmission to occur at a time for which the communication channel to the second power receiver 109 is free/assigned to such communication.

In some embodiments, the store 509 may store the forwarding data, for no less than 10 seconds, 1 minute, 5 minutes, 10 minutes, etc. In many embodiments, the forwarding data may be stored until it is explicitly requested by a second power receiver 109.

Indeed, in many embodiments, the store 509 may store the forwarding data such that it can be downloaded later by a second power receiver 109 even after the power transfer with the first power receiver 107 has terminated. For example, during a power transfer with a first power receiver 107, forwarding data may be uploaded and stored in the store 509. At a later stage, e.g. after power transfer to the first power receiver 107 has terminated, a new power transfer may be initialized with a second power receiver 109 and as part of this power transfer the communicator 209 may proceed to extract the forwarding data and transmit it to the second power receiver 109. Thus, in many embodiments, a store 509 may be included with the communicator 209 enabling and supporting a non-real time communication. Such non-real time communication may for example be highly suitable for communicating user preferences.

In some embodiments, the communication may indeed be for the same transmitter coil/communication coil. For example, for a given transmitter coil 203, a power transfer may be established with a first power receiver 107 and during this power transfer, forwarding data may be received from the first power receiver 107. After the power transfer has finished, the store 509 may continue to store the forwarding data. When a new power transfer is setup, the forwarding data may be retrieved from the store 509 and transmitted to the power receiver of the new power transfer.

Indeed, in some embodiments, the second power receiver 109 could be the same as the first power receiver 107 but during a subsequent power transfer. Thus, in some embodiments, a given power receiver may during a power transfer upload data to the power transmitter where it may be stored. The same power receiver may then download the data during a subsequent power transfer and thus the power receiver may effectively use the power transmitter as a memory, e.g. for operational parameters or user preferences. Thus, whereas in many embodiments and scenarios, the first power receiver 107 and the second power receiver 109 are different power receivers, including power receivers that are simultaneously receiving power via different transmitter coils, they may also in some embodiments be the same power receiver.

In particular, as described previously, in some scenarios a Ki power transmitter may enable real-time communication between two Ki-appliances. However, for some use cases, it may be desired that one Ki-appliance can communicate to another Ki-appliance that is off-line (so not powered by the cooktop at that moment). In that case, the Ki power transmitter (e.g. cooktop) may (temporarily) store the data until the other Ki-appliance is placed on the power transmitter and is ready to receive the data.

Another use case is for e.g. a low-cost Ki-appliance that has no non-volatile memory (so it does not need a back-up battery or internal flash memory) and still would like to store some data in non-volatile memory. In such a case, the Ki -appliance can upload the data to the power transmitter for retrieval during a later power transfer operation.

This method may also be useful in other scenarios, such as when the user moves a Ki-appliance from one power transfer coil to another (for example to make space for another appliance on a cook top). In that case, there will be a power interruption for a couple of seconds. If the Ki-appliance saves its latest status every couple of seconds to the cooktop's database (including some timestamp, for example retrieved from "date_and_time\time_HH:MM:SS"), then upon power up it can check if the previous status update is within a certain short time window (for example within 10 seconds). If so, it can continue using the last status report uploaded to the cooktop.

Different types of forwarding data may be communicated in different embodiments and scenarios.

In many cases, the forwarding data may include user preference data. For example, one power receiver may include a user interface from which a user can indicate particular user preferences, such as a a vegetable cooking time, or meat "well done" preference, etc. Other examples may include a preferred boiling time for eggs (hard boiled/ soft boiled), recipe preferences etc. Such user preferences may then be indicated in the forwarding data and transmit it to other power receivers which may not have a user interface.

In some embodiments and scenarios, the forwarding data may include synchronization data. Such synchronization data may allow the operations of different power receivers/Ki appliances to be synchronized to each other. An example of synchronization data may be for the first power receiver 107 to transmit an indication when a specific operation is started or finishes. The second power receiver 109 may receive this indication and in response start an operation thereby allowing this to be synchronized with that of the first power receiver 107.

In some embodiments, the forwarding data may include timing data. For example, when starting a recipe or series of operations, the first power receiver 107 may transmit timing information which indicates when each of these operations start and/or finish. The second power receiver 109 may receive this information and may then time when to start operations. Such an approach may for example be used to allow two Ki-appliances to finish cooking at the same time.

In some embodiments, the forwarding data may include an indication of a current or previous operation. For example, the first power receiver 107 may indicate which operations have been performed or which operation is currently being performed. The second power receiver 109 may then for example proceed to initiate an operation that matches this operation. For example, a user may have two airfryers and select a recipe on the GUI of one of the airfryers with this being used by both devices. This may lead to a chicken being fried (at a low temperature) in one airfryer while potatoes are fried (at a high temperature) in the other. These operations may be coordinated by exchanging data one when they are performed. As another example, the system may include a function of informing the user when one device is ready. As another example, a first power receiver may detect that liquid inside is boiling, this information may be communicated to a the second receiver causing this to e.g. start blending the vegetables to be cooked so that a user can add them.

In some embodiments, the communicator 209 is arranged to distribute the forwarding data over a plurality of communication messages and to transmit the plurality of communication messages to the second power receiver. Effectively, in some embodiments, a plurality of messages can be combined to provide a larger 'bulletin' that can contain more information than a single message (i.e. a set of data may be distributed over one or more messages with the set being referred to as a "bulletin"). Indeed, in many embodiments, the message size for a message to be transmitted to the second power receiver 109 may be limited and may be insufficient for transmission of the desired data and instead a set of messages may be combined to provide a data structure that can support larger amounts of forwarding data.

Similarly, in some embodiments, the communicator 209 may be arranged to combine forwarding data from a plurality of data messages received from the first power receiver over the first communication into single data message for transmission to the second power receiver over the second communication channel. In some embodiments, the forwarding data may be received in a plurality of messages from the first power receiver 107 and may be transmitted to the second power receiver 109 in a plurality of messages. Indeed, in some embodiments, the size of the data messages may be substantially the same so that each message received from the first power receiver 107 will include forwarding data that is transferred to a data message transmitted to the second power receiver 109.

For example, since the maximum message frame length is rather limited in the Ki standard, the amount of information that can be transmitted from a power transmitter to a Ki appliance or vice versa in a single message is also limited. Accordingly, the desired information to be transmitted may not fit in a single message. The system may accordingly stich multiple messages together to form one "bulletin" consisting of one or more messages. Since messages can get lost due to packet loss, a small and simple protocol is preferably used.

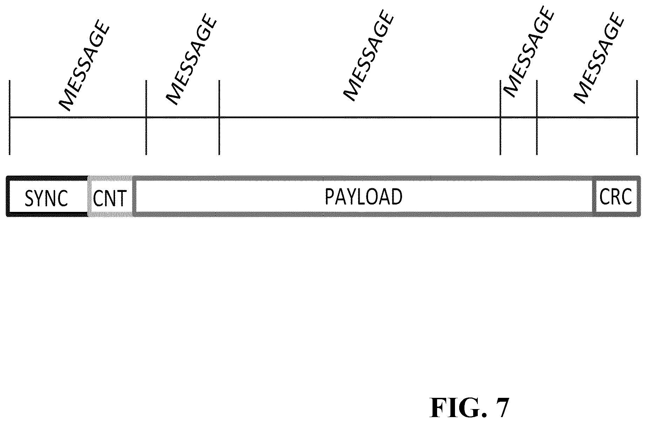

An example of a possible data message for communicating over a communication channel is illustrated in FIG. 7. The example is specifically for a Ki "PROP"/ "FORWARD" message that may support transmission of a "bulletin" over multiple messages. The approach may provide for one bulletin to be split over multiple messages, in an arbitrary manner, but for the messages to be received in order.

In the example, a new "bulletin" may start with a new message (so a message cannot contain (parts of) two different "bulletins". This simplifies synchronization.) The first few bytes of the "bulletin" contain some 'pattern/number for synchronization purposes. Next the bulletin length is encoded, followed by the actual payload. Finally, some kind of check data (e.g. a CRC checksum) is included.

When a message is missing (because of packet loss), the CRC will fail, and the bulletin may be discarded. The system may then try to resynchronize using the synchronization pattern.

In some embodiments, the message bulletin may specifically be in accordance with one or more of the following specifications:

| | |
|---|---|
| SYNC: | 32-bit synchronization "magic number". E.g. "00FF.00FF.8080.0101" |
| CNT: | 16-bit bulletin length, including SYNC, CNT, PAYLOAD, CRC |
| PAYLOAD:The | payload (bytes) |
| CRC: | 16-bit CRC over SYNC, CNT, PAYLOAD, excluding CRC itself. |

- Every bulletin should start with a new message
- When first message of bulletin does not start with SYNC, start resynchronization.
- Bulletin can be spread across multiple messages in an arbitrary manner
- It is assumed that messages belonging to a single bulletin will be received in order
- When CRC fails, bulletin should be ignored (and probably start resynchronization)
- Bulletin payload length max 65527 bytes (preferably much smaller!)

If a 16-bit bulletin length field is used, the maximum bulletin length is in the order of 64Kbyte (preferably much shorter, since a packet loss may require the entire bulletin to be retransmitted).

In some embodiments, the communicator 209 may be arranged to modify some or all of the forwarding data as part of the process. The communicator 209 may trigger a modification of the forwarding data in response to receiving the first data from the first power receiver. Thus, in some embodiments, the power transmitter may not only directly forward the received forwarding data without modification but may modify some of the data before being forwarded to the second power receiver 109. For example, a time stamp for some of the data may be modified such that it is continuously updated.

In some embodiments, the power transmitter may include a network interface 211 which is arranged to couple the power transmitter to a network.

For example, in some embodiments, the network interface 211 may couple the power transmitter to a local network, such as a local area network, WiFi network, home network, office network, etc.

The network interface 211 may in such cases be arranged to transmit received forwarding data to a remote node of the network. The remote node may typically be another power transmitter and thus the power transmitter may be arranged to transmit forwarding data to other power transmitters which may forward the received data to a power receiver supported by that power receiver. In some embodiments, the power transmitter may be arranged to receive forwarding data from a remote node/power transmitter and may transmit this forwarding data to the second power receiver 109.

Thus, in some embodiments, the system may be arranged to further distribute the forwarding data to other wireless power transmitters and thus effective communication links between power receivers supported by different power transmitters may be supported using a network based communication.

The system may support more advanced use cases that may require power receivers such as Ki-appliances that are not supported by the same power transmitter (on the same Ki cooktop) to communicate with each other (for example, an airfryer on a cooktop in the kitchen, and a keep-warm plate concealed in a dining table in the living room may communicate in order to align and synchronize operation).

The approach may use a dedicated/proprietary communication format or may e.g. allow communication between power transmitters using a suitable standard, such as the Matter standard. In this standard, a cook surface and a cook top are already defined entities. Specific operations are also defined, and the communication may utilize such definitions to provide effective communication and control. Further, additional device types and/or commands/operations may be defined to provide additional functionality and operations. For example, in order to enable proprietary Ki-messaging over Matter, Endpoints may be extended such that e.g. PROP-messages or FORWARD-messages can be communicated. When a power transmitter receives such a message via its Matter endpoint, it may forward the payload of that message to all supported power receivers using the Ki PROP (or FORWARD) message with the received data as payload.

In some embodiments, the network interface 211 may couple the power transmitter to the Internet. In such cases, the data received from the first power receiver 107 may include an Internet request and the network interface 211 may proceed to perform the request to retrieve data from the Internet. The received data may then be transmitted to one, more, or all of the power receivers supported by the power receiver.

Conversely, the data received from the first power receiver 107 may include an Internet request for data to be uploaded to the Internet, such as a specific server on the Internet. The network interface 211 may proceed to perform the request to upload data received from the first power receiver 107 to the Internet.

For example, the power transmitter may support receiving an Internet request such as a "HTTP_access\get" (retrieving data from the Internet) and/or an "HTTP_access\put" (uploading data to the Internet).

The power transmitter may accordingly enable Internet access to power receivers that do not themselves have such access.

For example, a power receiver may desire to retrieve data from a given URL, such as e.g. "www.philips.com". This URL may be transmitted to the power transmitter as part of an Internet request, e.g. "HTTP_access\get\www.philips.com/index.html". Receiving such a request may then trigger the power transmitter to retrieve the "index.html"-file from the Internet site www.philips.com. The received file/data may then be transmitted back to the power receiver (or indeed alternatively or additionally to another power receiver supported by the power transmitter).

As another example, a power receiver may desire to upload data to a given URL, such as e.g. "www.logs.philips.corn". This URL may be transmitted to the power transmitter as part of an Internet upload request, e.g. "HTTP_access\put\www.logs.philips.com/logfile.txt". Receiving such as request may then trigger the power transmitter to upload received data to the file "logfile.txt" at the URL www.logs.philips.com.

Thus, in some embodiments, the power transmitter may include the functionality required to access the Internet, including implementing the TCP/IP software stack, and the HTTP protocol handling etc. An advantage of such an approach is that a (low cost) power receiver can be provided with (simple) internet connectivity at extremely low (or even no) additional cost.

In many embodiments, the power transmitter may be arranged to automatically repeat all received forwarding data on all of the established communication channels, and thus may essentially be arranged to re-broadcast all received forwarding data.

In other embodiments, a more selective and adaptive distribution of data may be implemented. For example, in some embodiments, the forwarding data may only be transmitted to selected power receivers.

In particular, in some embodiments, the forwarding data may be linked with a power receiver identity and the communicator 209 may transmit this forwarding data linked with a power receiver identity (only) to a power receiver having an identity matching the power receiver identity linked to the data.

For example, the forwarding data received from the first power receiver 107 may be indicated to be for a power receiver having a given identity. As part of setting up a power transfer, power receivers may provide their identity to the power transmitter. The power transmitter may accordingly keep track of the power receiver identities for power receivers currently supported and when receiving the forwarding data, the communicator 209 may check if it is linked with a power receiver identity for a power receiver already supported. If so, it may proceed to transmit the forwarding data to that power receiver.

As another example, the received forwarding data may be stored together with the linked power receiver identity. Subsequently, whenever a new power transfer is setup, the power transmitter may proceed to compare the power receiver identity of the new power receiver to those for which forwarding data is stored. If a match is found, the communicator 209 may proceed to retrieve the forwarding data from the store 509 and send it to the new power receiver.

In some embodiments, the power receiver identity may be a unique identity which is unique to the individual power receiver. Thus, forwarding data may be transmitted from a power receiver to another specific power receiver.

However, in many embodiments, the power receiver identity may be a type or group identity. For example, the power receiver identity may indicate a manufacturer, type, etc. of the power receiver identity. Accordingly, in some embodiments, the approach may be useful to disseminate data between selected power receivers. For example, it may allow a manufacturer to distribute proprietary data between power receivers produced by that manufacturer.

As a specific example, for some use cases it may be desired that one Ki-appliance sends a message to a specific other Ki-appliance. For example, when a recipe is spread over three or more Ki-appliances, some messages might be intended specifically for one of the other Ki-appliances and not for all appliances.

To support such a scenario, a Ki-device can be addressed by a unique identifier (e.g. MAC address), as well as a (dynamic) functional address that is related to the recipe or meal that is currently being cooked. For example, a Ki-pan could be addressed by an address like "soup_pan" or "potato_pan". The assignment of this address could either be by the Ki-appliance itself (e.g. when the user interface of the soup pan is part of the soup pan) or by another Ki-appliance (e.g. when the user interface of the soup pan is part of the airfryer).

In some embodiments, some or all forwarding data may be linked with a label which may describe, characterize, or indicate a type or group of the data. For example, some forwarding data may be linked to a label indicating that it is recipe data, other forwarding data may be linked to a label indicating that the forwarding data is synchronization data etc.

In such cases, the second power receiver 109 may transmit a request for forwarding data with the request including an indication of one or more labels. The communicator 209 may then proceed to transmit forwarding data linked with labels that match those requested.

For example, in many embodiments, the power transmitter may store the forwarding data in the store 509 together with a labelling of the data. Specifically, the power transmitter may build up a database comprising received forwarding data with this being linked with a range of labels. A power receiver may then request specific data from the database.

As a particular example, communication between two power receivers such as Ki-appliances may be performed using a database that is stored and maintained by the power transmitter. In many examples, all power receivers/Ki-appliances may create/overwrite database entries and may retrieve already existing database entries. Because the database is maintained by the power transmitter, one power receiver/Ki-appliance may leave a message for one or more power receivers/ Ki-appliances that are currently off-line. When a power receiver/ Ki-appliance becomes available again (because it is placed for power transfer) it can retrieve the message from the database.

The data, and specifically each data bulletin, may be linked with a label such as a "topic name" and have a given "value". As a specific example, a label or "topic name" could for example be "last_cooked_meal" (or a numerical representation thereof), and the value could for example be the text "potatoes + beans". Any power receiver/Ki-appliance may be able to write to this topic, and any power receiver/Ki-appliance that is interested to know what has been the last cooked meal may read the most recent value of this topic.

Optionally, the labels/topic names can be ordered, for example topic names could be "cooking_history\today", "cooking_history\yesterday", "cooking_history\2_days_ago".

Another example is labels/topics with the name "credentials\local_wifi\SSID" and"credentials\local_wifi\password" where the SSID and password of the local home network may be stored. Once these topics have been created by either a power receiver/Ki-appliance or by the power transmitter (e.g. a cooktop) itself, this can allow other power receiver / Ki-devices to access to Wi-Fi network (for broadband internet access) without bothering the user with the complicated onboarding process of Wi-Fi.

In some cases, the power transmitter may perform some management of the data in the database. For example, it may be the responsibility of a power transmitter (cooktop) to move an item that was in "cooking_history\today" to "cooking_history\yesterday" at 00:00h at night.

In more general terms, the power transmitter may not only maintain the database of bulletins, but also perform some processing on (some of) the items in the database. For example the power transmitter could make sure that the topics with the names "date_and_time\time_HH:MM: SS" and "date_and_time\date_DD-MM-YYYY" stay up to date.

Another example is that the power transmitter could maintain a list of the power receiver/Ki-appliances (and e.g. the type) that have received a power transfer. This may allow other power receivers/Ki-appliances to know which devices are available in the household, which could e.g. be advantageous for menu suggestions that span multiple appliances.

A suitable protocol for allowing reading and writing from the database may be implemented. One possible approach may be for the payload of the bulletin of FIG. 7 to include (at least) three fields, namely command, topic_name and value.

The command field may reflect the operation to be performed such as writing to a topic (command = write) or reading from a topic (command = read_request). For the write command, the topic_name field and the value field be set appropriately but for a read_request command, only the topic_name field needs to be indicated by the power receiver, and the power transmitter can return a message with command = read_response and the topic_name and value fields filled in properly.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A wireless power transmitter (101) for wirelessly providing power to a power receiver (107, 109) via an electromagnetic power transfer signal, the power transmitter comprising:
at least one power transfer coil (103, 105) each of which is arranged to generate an electromagnetic power transfer signal for a power receiver in response to a drive signal being provided to the power transfer coil (103, 105);
a driver (201) arranged to generate at least one drive signal for the at least one power transfer coil (103, 105) to perform a power transfer;
a communicator (209) arranged to establish a communication channel with each power receiver (107, 109) receiving power via a power transfer coil of the at least one power transfer coil;
wherein the communicator (209) is arranged to receive first data from a first power receiver (107, 109) receiving power via a first communication channel established with the first power receiver (107, 109) and to forward the data to a second power receiver (107, 109) receiving power over a second communication channel established with the second power receiver (107, 109).

2. The wireless power transmitter of claim 1 wherein the first power receiver (107) is receiving power from a first power transfer coil (103) of the at least one power transfer coil (103, 105) and the second power receiver (109) is a different power receiver receiving power from a second power transfer coil (105) of the at least one power transfer coil (103, 105), the first power transfer coil (103) and the second power transfer coil (105) being different power transfer coils.

3. The wireless power transmitter of claim 2 wherein the first power receiver (107) and the second power receiver (109) are receiving power simultaneously.

4. The wireless power transmitter of any previous claim wherein the communicator (209) comprises a store (509) arranged to store the first data and the communicator (209) is arranged to retrieve the first data from the store for subsequent transmission of the first data to the second power receiver (109).

5. The wireless power transmitter of claim 4 wherein the communicator (209) is arranged to transmit the first data to the second power receiver (109) after termination of a power transfer for the first power receiver (107).

6. The wireless power transmitter of any previous claim wherein the first power receiver (107) is different from the second power receiver (109).

7. The wireless power transmitter of any previous claim wherein the first power receiver (107) and the second power receiver (109) are the same power receiver.

8. The wireless power transmitter of any previous claim the communicator (209) is arranged to trigger a modification of the first data in response to receiving the first data from the first power receiver (107).

9. The wireless power transmitter of any previous claim wherein the communicator (209) is arranged to distribute the first data over a plurality of communication messages and to transmit the plurality of communication messages to the second power receiver (109).

10. The wireless power transmitter of any previous claim wherein the communicator (209) is arranged to combine first data from a plurality of data messages received from the first power receiver (107) over the first communication channel into a single data message for transmission to the second power receiver (109) over the second communication channel.

11. The wireless power transmitter of any previous claim wherein the first data includes at least one from the group of:
user preference data;
synchronization data;
timing data;
an indication of a previous operation;
an indication of a current operation; and
network access data.

12. The wireless power transmitter of any previous claim further comprising a network interface (211) coupling to a network; and the network interface (211) is arranged to
transmit the first data to a remote node of the network; and/or
receive second data from a remote node of the network and to transmit it to the second power receiver (109) over the second communication channel.

13. The wireless power transmitter of any previous claim wherein the communicator (209) is arranged to receive a label for at least some of the first data and to transmit the at least some of the first data to the second power receiver (109) in dependence on receiving a request message from the second power receiver (109) comprising a label indication matching the label for the at least some of the first data.

14. A power transfer system comprising a power transmitter in accordance with any of the claims 1 to 13 and further comprising the second power receiver, the second power receiver comprising:
an input circuit (107, 503) comprising a receiver coil (107) arranged to extract power from the power transfer signal;
a power path (503) coupling the input circuit (107, 503) to a load (505) to provide power extracted from the power transfer signal to the load (505);
a communicator (509,511) arranged to receive the first data from the power transmitter via the second communication channel; and
an adapter (525) arranged to adapt an operation of the power transfer in dependence on the first data.

15. A power receiver for wirelessly receiving power from a power transmitter via an inductive power transfer signal, the power receiver (105) comprising:
an input circuit (107, 503) comprising a receiver coil (107) arranged to extract power from the power transfer signal;
a power path (503) coupling the input circuit (107, 503) to a load (505) to provide power extracted from the power transfer signal to the load (505);
a communicator (509,511) arranged to communicate data with the power transmitter via a communication channel, the communicator (509,511) being arranged to transmit a request for operational data and to receive operational from the power transmitter in response to the request for operational data; and
an adapter (525) arranged to adapt an operation of the power transfer in dependence on the received operational data.

16. A method of operation for a wireless power transmitter (101) wirelessly providing power to a power receiver (107, 109) via an electromagnetic power transfer signal, the power transmitter comprising:
at least one power transfer coil (103, 105) each of which is arranged to generate an electromagnetic power transfer signal for a power receiver in response to a drive signal being provided to the power transfer coil (103, 105); and the method comprising:
generating at least one drive signal for the at least one power transfer coil (103, 105) to perform a power transfer;
establishing a communication channel with each power receiver (107, 109) receiving power via a power transfer coil of the at least one power transfer coil;
receiving first data from a first power receiver (107, 109) receiving power via a first communication channel established with the first power receiver (107, 109); and
forwarding the data to a second power receiver(107, 109) receiving power over a second communication channel established with the second power receiver (107, 109).

17. A method of operation for a power receiver wirelessly receiving power from a power transmitter via an inductive power transfer signal, the power receiver (105) comprising:
an input circuit (107, 503) comprising a receiver coil (107) arranged to extract power from the power transfer signal;
a power path (503) coupling the input circuit (107, 503) to a load (505) to provide power extracted from the power transfer signal to the load (505); and the method comprising:
communicating data with the power transmitter via a communication channel, including transmitting a request for operational data and receiving operational from the power transmitter in response to the request for operational data; and
adapting an operation of the power transfer in dependence on the received operational data.
